(19) Europäisches Patentamt
European Patent Office
Office européen des brevets

(11) EP 2 669 980 A1

(12) **EUROPEAN PATENT APPLICATION**
published in accordance with Art. 153(4) EPC

(43) Date of publication:
04.12.2013 Bulletin 2013/49

(51) Int Cl.:
*H01M 8/04* (2006.01)          *H01M 8/06* (2006.01)
*H01M 8/12* (2006.01)

(21) Application number: 12740026.5

(22) Date of filing: 24.01.2012

(86) International application number:
PCT/JP2012/051400

(87) International publication number:
WO 2012/102253 (02.08.2012 Gazette 2012/31)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 24.01.2011 JP 2011011707

(71) Applicant: Nissan Motor Co., Ltd
Yokohama-shi, Kanagawa 221-0023 (JP)

(72) Inventor: KAMIJO, Motohisa
KANAGAWA 243-0123 (JP)

(74) Representative: Hager, Thomas Johannes
Hoefer & Partner
Patentanwälte
Pilgersheimer Strasse 20
81543 München (DE)

(54) **FUEL CELL POWER GENERATION SYSTEM, AND METHOD FOR CONTROL OF FUEL CELL POWER GENERATION SYSTEM**

(57) A fuel cell power generation system according an embodiment of the present invention comprises: a fuel cell (11) which generates electric power upon supply of oxidation gas and fuel gas; and a temperature adjustment unit (23, 32, 33) which adjusts the temperature of the oxidation gas to be supplied to an oxidation-gas inlet of the fuel cell (11). In a case where the required output of the fuel cell (11) is high, the temperature adjustment unit is controlled to make the temperature of the oxidation gas to be supplied to the oxidation-gas inlet higher than that in a case where the required output is low. In this manner, in the case where the required output of the fuel cell (11) is high, the operating temperature of the fuel cell (11) is made higher than that in the case where the required output is low.

FIG. 1

**Description**

TECHNICAL FIELD

The present invention relates to a fuel cell power generation system and to a method of controlling a fuel cell power generation system, which generate electric power while adjusting the temperature of a fuel cell in accordance with the required output.

BACKGROUND ART

Japanese Patent Application Publication No. 2003-115315 (Patent Literature 1) and Japanese Patent Application Publication No. 2004-349214 (Patent Literature 2) disclose fuel cell power generation systems in each of which, when the power generation output is to be increased, the temperature of oxygen gas to be supplied to the cathode of the fuel cell is lowered so as to maintain the temperature of the fuel cell substantially constant (e.g. ±10°C).

In Patent Literature 1, the reaction temperature is limited to be within ±10°C, and the output of the fuel cell is therefore limited, making it impossible to widen the controllable range of power generation output. Suppose, for example, that a fuel cell power generation system is mounted on a vehicle to supply the vehicle's travelling energy. In this case, an electric power of several KW is required during a normal driving state which includes travelling in town and JC08 mode, and tens of KW or higher is needed during a high speed driving state at 100 Km/h or higher. However, the techniques described in Patent Literatures 1 and 2 cannot satisfy the need for this wide power generation output range.

CITATION LIST

PATENT LITERATURES

Patent Literature 1: Japanese Patent Application Publication No. 2003-115315
Patent Literature 2: Japanese Patent Application Publication No. 2004-349214

SUMMARY OF INVENTION

As described above, it is difficult for the related techniques disclosed Patent Literatures 1 and 2 to handle changes in the amount of power generation. Thus, the inventor acknowledges that there is a demand for development of a fuel cell power generation system capable of flexibly handling changes in the amount of power generation.

The present invention has been made for solving a technical problem as described above, and an object thereof is to provide a fuel cell power generation system and a method of controlling a fuel cell power generation system, which are capable of changing the operating temperature of a fuel cell in accordance with the required power output.

To achieve the above object, a fuel cell power generation system according to an embodiment of the present invention comprises: a fuel cell configured to generate electric power upon supply of oxidation gas and fuel gas; and a temperature adjustment unit configured to adjust the temperature of the oxidation gas to be supplied to an oxidation-gas inlet of the fuel cell. In a case where the required output of the fuel cell is high, the temperature adjustment unit is controlled to make the temperature of the oxidation gas to be supplied to the oxidation-gas inlet higher than that in a case where the required output is low. In this manner, in the case where the required output of the fuel cell is high, the operating temperature of the fuel cell is made higher than that in the case where the required output is low.

BRIEF DESCRIPTION OF DRAWINGS

[Fig. 1] Fig. 1 is a block diagram showing the configuration of a fuel cell power generation system according to a first embodiment of the present invention.
[Fig. 2] Fig. 2 is a characteristics chart showing the correlation between a power output ratio and the ratio of the amount of heat generation by combustion of a burner in the fuel cell power generation system according to the embodiment of the present invention.
[Fig. 3] Fig. 3 is a characteristics chart showing the correlation between the power output ratio and system efficiency in the fuel cell power generation system according to the embodiment of the present invention.
[Fig. 4] Fig. 4 is a characteristics chart showing the correlation between the power output ratio and an excess oxidation gas percentage ratio in the fuel cell power generation system according to the embodiment of the present invention.

[Fig. 5] Fig. 5 is a flowchart showing the sequence of an output control process of the fuel cell power generation system according to the first embodiment of the present invention.

[Fig. 6] Fig. 6 is a block diagram showing the configuration of a fuel cell power generation system according to a second embodiment of the present invention.

[Fig. 7] Fig. 7 is a flowchart showing the sequence of an output control process of the fuel cell power generation system according to the second embodiment of the present invention.

[Fig. 8] Fig. 8 is a block diagram showing the configuration of a fuel cell power generation system according to a third embodiment of the present invention.

[Fig. 9] Fig. 9 is a flowchart showing the sequence of an output control process of the fuel cell power generation system according to the third embodiment of the present invention.

DESCRIPTION OF EMBODIMENTS

[First Embodiment]

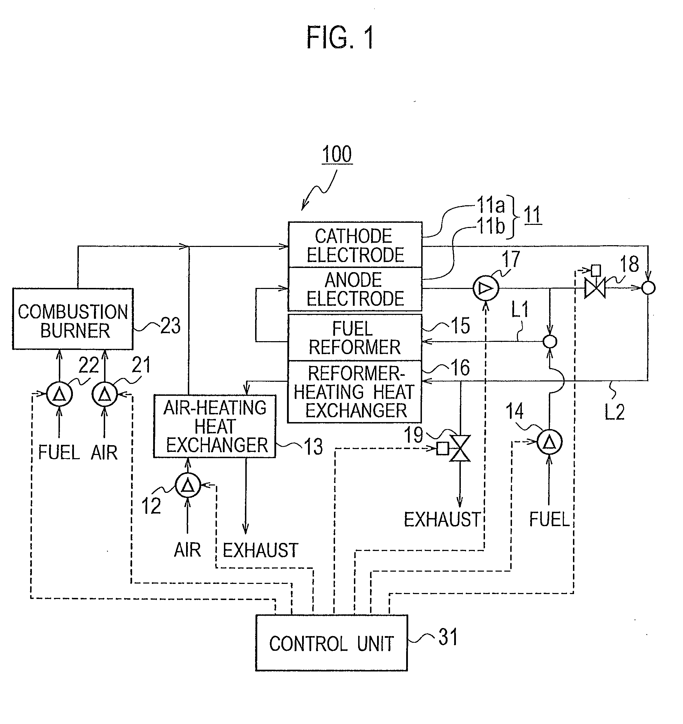

Hereinbelow, embodiments of the present invention will be described based on the drawings. Fig. 1 is a block diagram showing the configuration of a fuel cell power generation system 100 according to a first embodiment of the present invention. As shown in Fig. 1, the fuel cell power generation system 100 includes: a fuel cell 11 including a cathode electrode 11a and an anode electrode 11b; a first air blower 12 (an oxidation-gas supply unit) which supplies air, as an example of oxidation gas, to the cathode electrode 11a; an air-heating heat exchanger 13 (heat exchange unit) which heats the air sent out by the first air blower 12; a first fuel pump 14 which supplies a fuel such as hydrocarbon fuel to the anode electrode 11b of the fuel cell 11; and a fuel reformer 15 which reforms the fuel sent out from the first fuel pump 14 through a fuel-gas flow path L1 and supplies the reformed fuel to the anode electrode 11b.

The fuel cell power generation system 100 further includes: a fuel circulating blower 17 which circulates fuel gas discharged from the anode electrode 11b into the fuel reformer 15; a reformer-heating heat exchanger 16 (reformer heating unit) to which exhaust gas discharged from the cathode electrode 11 a is introduced through an exhaust-gas flow path L2 and which heats the fuel reformer 15 by using the introduced exhaust gas; a fuel-flow-path pressure adjustment valve 18 (second pressure adjustment valve) which is provided between the output opening of the fuel circulating blower 17 and the exhaust-gas flow path L2 and introduces a part of the fuel gas discharged from the anode electrode 11b into the exhaust-gas flow path L2; and an exhaust-flow-path pressure adjustment valve 19 (first pressure adjustment valve) which is provided to the exhaust-gas flow path L2 near the reformer-heating heat exchanger 16 and discharges, to the outside, a part of the exhaust gas to be introduced into the reformer-heating heat exchanger 16 through the exhaust-gas flow path L2.

The fuel cell power generation system 100 also includes a combustion burner 23 (temperature adjustment unit, temperature adjustment means) which performs combustion using air supplied by a second air blower 21 and fuel supplied by a second fuel pump 22 and introduces heated air into an oxidation-gas inlet of the cathode electrode 11 a.

The fuel cell 11 is a solid oxide fuel cell (SOFC), for example, and generates electric power by using the reformed fuel supplied to the anode electrode 11b and the air supplied to the cathode electrode 11 a and supplies the electric power to equipment  such as a motor that needs electric power.

The fuel reformer 15 is configured to be heated by heat supplied by the reformer-heating heat exchanger 16 and reform fuel supplied by the first fuel pump 14 though a catalytic reaction, and supply the reformed fuel, i.e. reformed gas containing hydrogen gas to the anode electrode 11b of the fuel cell 11.

Meanwhile, the first air blower 12, the first fuel pump 14, the second air blower 21, the second fuel pump 22, the exhaust-flow-path pressure adjustment valve 19, and the fuel-flow-path pressure adjustment valve 18 are each connected to a control unit 31 (control means). This control unit 31 is a device formed, for example, of a CPU, a RAM, a ROM, various controllers, and so on and, as will be described later, controls each component by sending a control signal to the component in accordance with the required power output.

Next, operation of the fuel cell power generation system 100 according to this embodiment will be described. The fuel cell power generation system 100 according to this embodiment drives the combustion burner 23 to supply heated air to the fuel cell 11 and thus change the operating temperature of the fuel cell 11, so as to handle changes in output power. Here, it is preferable to change the temperature within a range of ±50°C from the operating temperature in a normal state. As an example, this embodiment will describe an instance where the operating temperature of the fuel cell 11 in the normal state is 700°C, and the operating temperature is changed within a range of ±50°C from this temperature, i.e. within a range of 650°C to 750°C. Meanwhile, the fuel reformer 15 operates at a temperature of approximately 700°C.

First, the first air blower 12 is driven to send out air from the first air blower 12. The air sent out by the first air blower 12 passes through a low temperature side of the air-heating heat exchanger 13, i.e. a side where heat absorption occurs, and is then introduced into the oxidation-gas inlet of the cathode electrode 11 a. Here, hot exhaust gas discharged from the reformer-heating heat exchanger 16 is introduced into a high temperature side of the air-heating heat exchanger 13, i.e. a side where heat dissipation occurs. Thus, the air sent out by the first air blower 12 is heated by the heat of the exhaust gas to a temperature lower than the temperature of the fuel cell 11 by 200°C to 300°C, and is then introduced into the oxidation-gas inlet of the cathode electrode 11 a. Note that the oxidation gas is not limited to air, and a gas containing oxygen can be used instead.

Moreover, the second air blower 21 and the second fuel pump 22 are driven and fuel is combusted in the combustion burner 23 to send out heated air from the combustion burner 23. This heated air is mixed with air sent out by the first air blower 12 and is introduced into the oxidation-gas inlet of the cathode electrode 11 a. Here, the amount of the air supplied by the second air blower 21 and the amount of the fuel supplied by the second fuel pump 22 are adjusted as appropriate. In this way, air can be supplied into the oxidation-gas inlet of the cathode electrode 11a at a desired temperature in a desired amount.

Thus, by controlling the amount and temperature of the air to be sent out by the combustion burner 23 under the control of the control unit 31, it is possible to adjust the amount and temperature of the air to be supplied into the fuel inlet of the cathode electrode 11 a.

Next, the correlation between the operating temperature and the power generation output of the fuel cell 11 will be described. First, the description will be given of a case of not driving the combustion burner 23.

The temperature of air to be introduced into the oxidation-gas inlet of the cathode electrode 11 a is a temperature lower than the normal operating temperature of the fuel cell 11 (650°C to 750°C) by 200°C to 300°C, for example. Hence, the air introduced in the cathode electrode 11a is heated by thermal energy produced during power generation of the fuel cell 11 to approximately the same temperature as the temperature of the fuel cell 11 and discharged through the outlet of the cathode electrode 11a. Thus, the larger the difference between the operating temperature of the fuel cell 11 and the temperature of the introduced air, the larger the amount of heat that moves from the fuel cell 11 to the air.

Moreover, increase in the power output of the fuel cell 11 leads to increase in the amount of heat dissipation at the fuel cell 11. Then, if the amount of heat dissipation increases to or exceeds the amount of heat transmittable to air within the fuel cell 11, the operating temperature of the fuel cell 11 rises and exceeds to its normal temperature. For this reason, the number of revolutions of the first air blower 12 needs to be controlled to increase the amount of air to be introduced into the oxidation-gas inlet. That is, the amount of air is increased so that the amount of heat transmittable from the fuel cell 11 to air can be increased, thereby lowering the operating temperature of the fuel cell 11 to its normal temperature.

Next, the description will be given of a case of driving the combustion burner 23 to mix heated air sent out by the combustion burner 23 into air sent out by the first air blower 12 and introduce the mixed air into the oxidation-gas inlet, while appropriately adjusting the temperature and flow rate of the combustion burner 23 to change the operating temperature of the fuel cell 11.

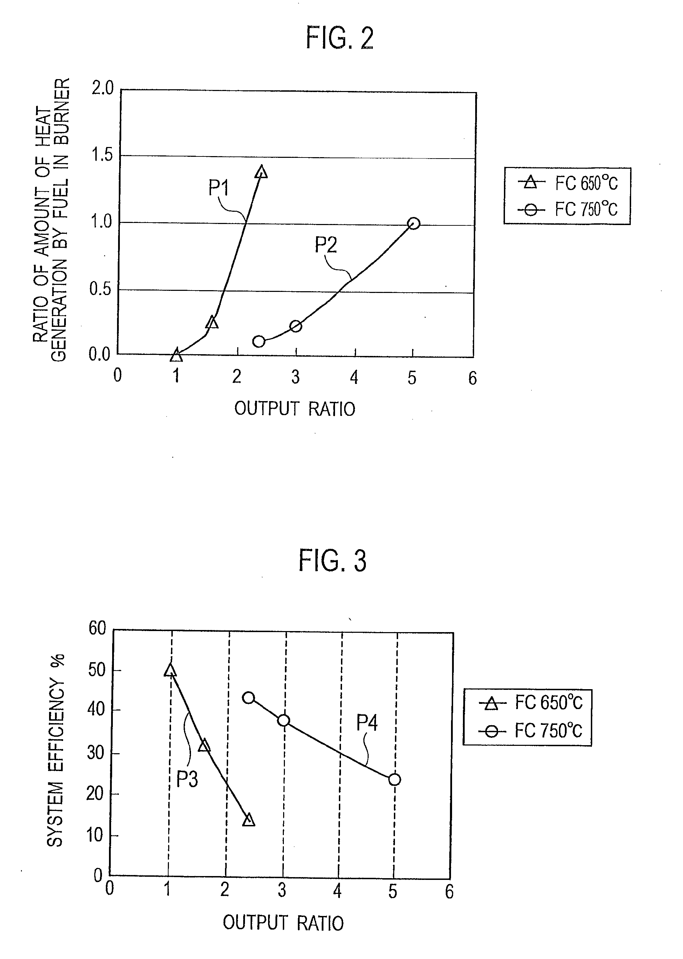

Fig. 2 is a characteristics chart showing the correlation between the output power of the fuel cell 11 and the amount of heat generation by the fuel in the combustion burner 23. A curve P1 in Fig. 2 shows a case where the operating temperature of the fuel cell 11 is 650°C, while a curve P2 shows a case where the operating temperature of the fuel cell 11 is 750°C. Fig. 2 shows the correlation between the output ratio of electric power and the ratio of the amount of heat generation by the fuel in the burner, in the case where the output power during the maximum output operation with the operating temperature of the fuel cell 11 being 750°C is set to "5," and the amount of heat generation by the fuel in the burner in that state is set to "1."

As shown by the curve P1 in Fig. 2, in the case where the operating temperature of the fuel cell 11 is 650°C, the ratio of the amount of heat generation by the fuel in the burner abruptly increases as the power output ratio increases from "1," and the ratio of the amount of heat generation by the fuel in the burner reaches "1.4" when the power output ratio is "2.4." In contrast, as shown by the curve P2, in the case where the operating temperature of the fuel cell 11 is 750°C, the ratio of the amount of heat generation by the fuel in the burner is approximately "0.2" when the power output ratio is "2.4," and the ratio of the amount of heat generation by the fuel in the burner then linearly increases as the output ratio increases.

Here, in a comparison between the curve P1 and the curve P2 shown in Fig. 2 at a power output ratio of "2.4," for example, the amount of heat generation of the combustion burner 23 is greater and the amount of fuel supplied to the combustion burner 23 is therefore greater in the case where the operating temperature of the fuel cell is low. This is because under a condition where the operating temperature of the fuel cell 11 is lower, the power generation efficiency is lower, so that the amount of heat dissipation increases accordingly, which in turn results in a need for introduction of more air and increases the necessary amount of fuel for heating this air.

Moreover, Fig. 3 shows the correlation between system efficiency and the output power in the case where the amount of introduced air and the amount of fuel in the combustion burner 23 are changed in accordance with changes in the output power. In Fig. 3, a curve P3 shows a case where the operating temperature of the fuel cell 11 is 650°C, while a curve P4 shows a case where the operating temperature of the fuel cell 11 is 750°C. In this case, the system efficiency is calculated from an equation (1) below.

$$\text{System Efficiency [\%]} = (\text{Generated Power [KW]} / \text{Rate of Heat Generation by}$$

$$\text{Reformed Fuel [KJ/sec])} + \text{Rate of Heat Generation by Fuel in Burner [KJ/sec])} \times 100$$

$$\dots (1).$$

If a power generation range of several KW to tens of KW is to be covered while operating the fuel cell 11 at a low temperature, e.g. 650°C, it is necessary to install a large fuel cell 11 in advance so as to be capable of handling the maximum output. For example, in the case of the fuel cell 11 having performance shown in Fig. 3, the output ratio reaches a peak output approximately at "2.5," and the output cannot be any larger. Thus, if an output ratio of, for example, "5" is to be achieved, the size of the fuel cell 11 needs to be about two times larger. This case, however, causes a problem that the cost of the fuel cell 11 becomes about two times higher and also that the power generation efficiency becomes low.

Meanwhile, in the case where the fuel cell 11 is to be operated at a high temperature, e.g. 750°C, the efficiency of the fuel cell 11 is high, thereby making it possible to cover a wider power generation range than the case where the fuel cell 11 is operated at a lower temperature of 650°C, for example. However, there is a disadvantage that the fuel cell 11 needs to be maintained at a high temperature, and it is therefore necessary to use many materials to maintain the durability and to use costly materials, which in turn leads to problems of increased size and cost of the fuel cell 11.

In this regard, in this embodiment, air heated by the combustion burner 23 is introduced into the oxidation-gas inlet of the cathode electrode 11 a to change the operating temperature of the fuel cell 11, so as to solve the above problems.

In the case of using an SOFC power generation system as a power supply for driving a vehicle, an electric power of a relatively low output (several KW) is assumed for electric power required during a normal driving state such as travelling in town or JC08 mode. On the other hand, in the case of driving at a speed of 80 Km/h or higher for several hours, an electric power of a relatively high output (tens of KW) is required. The fuel cell 11 capable of actively changing the operating temperature is effective in a use condition as above. That is, in generation of relatively low electric power which dominates most of the driving period, the operating temperature of the fuel cell 11 is set low, e.g. 650°C, and the fuel cell 11 is operated at the most suitable point allowing high efficiency at this operating temperature. Moreover, in the case of generating high output power, the operating temperature of the fuel cell 11 is raised to 750°C, for example.

With the above configuration, it is possible to provide the fuel cell 11 in a compact shape capable of widening the output power range and, at the same time, minimizing the length of high temperature operation that accelerates durability deterioration.

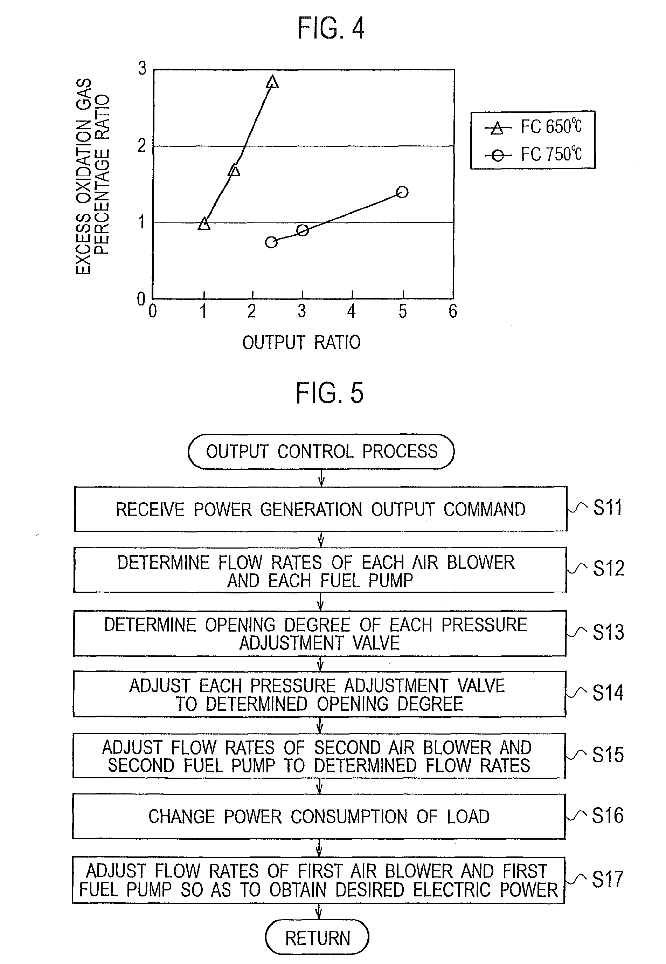

Further, in this embodiment, the flow rate of air to be supplied to the cathode electrode 11a of the fuel cell 11 varies because the operating temperature of the fuel cell 11 is changed within a range of 650°C to 750°C so as to improve the system efficiency. Fig. 4 is a characteristics chart showing changes in the oxidation gas (air in this embodiment) and an excess oxidation gas percentage against the power output ratio. Here, the excess oxidation gas percentage can be found by the following equation (2).

$$(\text{Excess Oxidation Gas Percentage}) = (\text{Flow Rate of Oxidation Gas Supplied to}$$

$$\text{Fuel Cell}) / (\text{Flow Rate of Oxidation Gas Required for Fuel Cell Reaction}) \dots (2).$$

An excess oxidation gas percentage ratio is the ratio of the excess oxidation gas percentage in each condition in the case where the power output ratio is "1" and the excess oxidation gas percentage with the operating temperature of the fuel cell 11 being 650°C is "1." The air functions as coolant for adjusting the temperature of the fuel cell. Accordingly, as the operating state of the fuel cell changes, the actual amount of oxidation gas (air) to be supplied changes greatly with respect to the required amount of oxidation gas (air).

Meanwhile, the flow path through which the air flows (the flow path on the inlet side of the cathode electrode 11 a), the exhaust-gas flow path L2, and the fuel-gas flow path L1 each have a fixed size. Thus, increase in the gas flow rate raises the pressure of the gas flow path. In this embodiment, the increase in the pressure of each flow path is prevented by adjusting the opening degrees of the fuel-flow-path pressure adjustment valve 18 and the exhaust-flow-path pressure adjustment valve 19. Further, the pressure difference between the cathode electrode 11a and the anode electrode 11b of the fuel cell 11 can be reduced, and the pressure of the fuel gas to be supplied to the fuel reformer 15 can be a desired pressure.

In the following, specific processing steps by the control unit 31 will be described with reference to a flowchart shown in Fig. 5.

First, in step S11, when a host system outputs a power generation output command, the control unit 31 receives this power generation output command.

In step S12, based on the power generation output command, the control unit 31 determines the flow rates of the first air blower 12, the first fuel pump 14, the second air blower 21, and the second fuel pump 22 that are suitable for outputting electric power corresponding to the power generation output command. Here, the control unit 31 refers to a target temperature data map (not shown) of the fuel cell 11 which has been set in advance according to power generation outputs, for example. As mentioned above, a low temperature (e.g. 650°C) is set in the case where the electric power to be outputted is small, and a higher temperature (e.g. 750°C) is set in the case where the electric power to be outputted is large. In this way, it is possible, with a compact fuel cell 11, to widen the output power range and, at the same time, minimize the length of high temperature operation that accelerates durability deterioration. Moreover, the flow rates of the air blowers 12 and 21 and the fuel pumps 14 and 22 can be set based on data of system experiments conducted in advance.

In step S13, the control unit 31 determines the opening degrees of the fuel-flow-path pressure adjustment valve 18 and the exhaust-flow-path pressure adjustment valve 19 in accordance with the flow rates of the air blowers 12 and 21 and the flow rates of the fuel pumps 14 and 22 set in the process of step S12.

In step S 14, the control unit 31 sends opening-degree adjustment signals to the fuel-flow-path pressure adjustment valve 18 and the exhaust-flow-path pressure adjustment valve 19 so as to obtain the opening degrees determined in the process of step S13. As a result, the fuel-flow-path pressure adjustment valve 18 and the exhaust-flow-path pressure adjustment valve 19 are adjusted to the determined opening degrees.

In step S 15, the control unit 31 sends number-of-revolutions adjustment signals to the second air blower 21 and the second fuel pump 22 so as to obtain the flow rates thereof determined in the process of step S12. As a result, the second air blower 21 and the second fuel pump 22 are adjusted to supply air and fuel at the determined flow rates. Specifically, in the case where high output power is required, the flow rates of the second air blower 21 and the second fuel pump 22 are made higher than those in a case where the output power is low, thereby making the amount of heat generation of the combustion burner 23 higher.

By executing the processes of step S11 to S 15 described above, the fuel cell power generation system 100 can be prepared for changes to be made in the output power in steps S16 and S17 below. That is, excessive temperature increase and abnormal pressure increase of the fuel cell 11 can be suppressed.

Thereafter, in step S16, the control unit 31 adjusts the power consumption of an external load to thereby adjust the output power of the fuel cell 11.

In step S 17, the control unit 31 sends number-of-revolutions adjustment signals to the first air blower 12 and the first fuel pump 14 so as to obtain the flow rates thereof determined in the process of step S12. As a result, the first air blower 12 and the first fuel pump 14 are adjusted to the determined flow rates. Consequently, the temperature of the fuel cell 11 can be controlled to a temperature suitable for the power consumption of the external load, and also the pressure of the exhaust gas can be controlled to a suitable pressure.

As described above, in the fuel cell power generation system 100 according to the first embodiment, air sent out by the first air blower 12 is supplied to the oxidation-gas inlet of the cathode electrode 11a of the fuel cell 11, and heated air sent out by the combustion burner 23 is introduced into the oxidation-gas inlet as well. Thus, in the case where high output power is required, the amount of heat generation of the combustion burner 23 is increased to raise the temperature of the air to be introduced into the oxidation-gas inlet of the cathode electrode 11a and thereby raise the operating temperature of the fuel cell 11. Accordingly, the operable output can be improved significantly. For example, as shown in the characteristics chart in Fig. 3, the range of the power output ratio is 1 to 2.4 in the case where the operating temperature of the fuel cell 11 is 650°C only, but the range of the power output ratio can be widened to 1 to 5 by allowing the operating temperature to change within a range of 650°C to 750°C. In other words, the operable output can be improved significantly. Moreover, in the case of driving with low output power, the amount of power generation of the combustion burner 23 is reduced to lower the temperature of the air to be introduced into the oxidation-gas inlet of the cathode electrode 11a. In this way, the operating temperature of the fuel cell 11 can be lowered.

Moreover, in the fuel cell power generation system 100 according to this embodiment, the combustion energy of the combustion burner 23 can be utilized as heating energy at the time of raising the output power of the fuel cell 11. Thus, energy loss can be reduced, and the system efficiency can therefore be improved, as compared to a case where an electric heater or the like is used to heat the air, for example. Moreover, by using the combustion burner 23, temperature control response can be improved as compared to a case where an electric heater or the like is used.

Further, since the combustion burner 23 is used to adjust the operating temperature of the fuel cell 11, the raised temperature in the air-heating heat exchanger 13 for heating air sent out from the first air blower 12 does not need to be high. Accordingly, the air-heating heat exchanger 13 can be reduced in size, making it possible to reduce the size of the system as a whole and to reduce the cost.

Moreover, the fuel-flow-path pressure adjustment valve 18 is provided to the fuel-gas flow path L1, and the exhaust-flow-path pressure adjustment valve 19 is provided to the exhaust-gas flow path L2. In high output operation, the operating temperature of the fuel cell 11 is raised, resulting in increase in the flow rate of air (the flow rate of oxidation gas). In this case, the opening degrees of the pressure adjustment valves 18 and 19 are adjusted, thereby preventing increase in the pressures of the fuel-gas flow path L1 and the exhaust-gas flow path L2. Accordingly, it is possible to avoid the occurrence of troubles including leakage of gas from the exhaust-gas flow path L2 to the fuel-gas flow path L1 or the outside due to increase in the pressure of the exhaust-gas flow path L2, and breakage of the fuel cell due to the pressure difference.

Further, in this embodiment, when the operating temperature is raised for high output operation of the fuel cell 11, thereby increasing the flow rate of air and thus increasing the pressure of the oxidation gas flow path, the pressure of the fuel-gas flow path L1 is raised according to this pressure increase. Accordingly, it is possible to prevent leakage of gas from the air flow path to the fuel-gas flow path and breakage of the fuel cell due to a pressure difference. The adjustment of the pressure of the fuel-gas flow path L1 can be achieved by adjustment of the opening degree of the fuel-flow-path pressure adjustment valve 18.

[Second Embodiment]

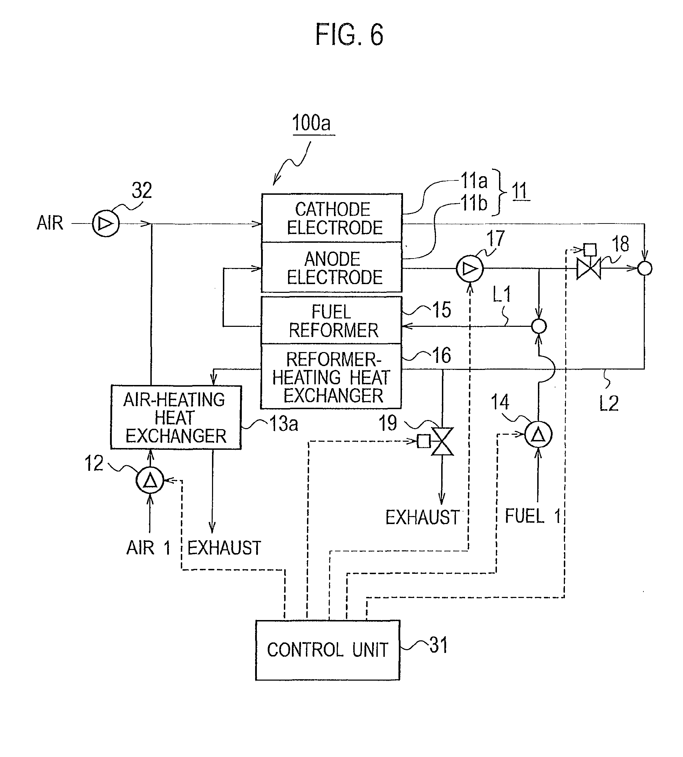

Next, a fuel cell power generation system according to a second embodiment of the present invention will be described. Fig. 6 is a block diagram showing the configuration of a fuel cell power generation system 100a according to the second embodiment. As shown in Fig. 6, the second embodiment differs from the fuel cell power generation system 100 of the foregoing first embodiment in that a third air blower 32 (temperature adjustment unit, temperature adjustment means) is provided instead of the combustion burner 23 connected to the cathode electrode 11a of the fuel cell 11. That is, in the fuel cell power generation system 100a shown in Fig. 6, unheated air sent out by the third air blower 32 can be introduced into the oxidation-gas inlet of the cathode electrode 11a.

Moreover, in the fuel cell power generation system 100 according to the second embodiment, as an air-heating heat exchanger 13a provided on the output side of the first air blower 12, used is one that is larger than the air-heating heat exchanger 13 shown in Fig. 1. Thus, air sent out by the first air blower 12 receives the heat of exhaust gas supplied to the air-heating heat exchanger 13a and is heated to a higher temperature.

Specifically, the air-heating heat exchanger 13a shown in Fig. 6 has a heat transfer area large enough to heat, to a predetermined temperature, air equivalent to an output ratio of "5" in the characteristic curve shown in Fig. 4. Supplying air at a low flow rate equivalent to an output ratio of "1" increases the temperature of a low temperature side of the air-heating heat exchanger 13a and thus reduces the temperature difference from the operating temperature of the fuel cell 11. For this reason, the temperature of the fuel cell 11 may fail to be maintained at 650°C. In this respect, in the second embodiment, in the case where the output ratio is small and the fuel cell 11 is operated at a low temperature, the third air blower 32 sends out unheated air to lower the temperature of the air to be introduced into the oxidation gas inlet of the cathode 11a. In this way, the operating temperature of the fuel cell 11 can be suppressed to a low temperature.

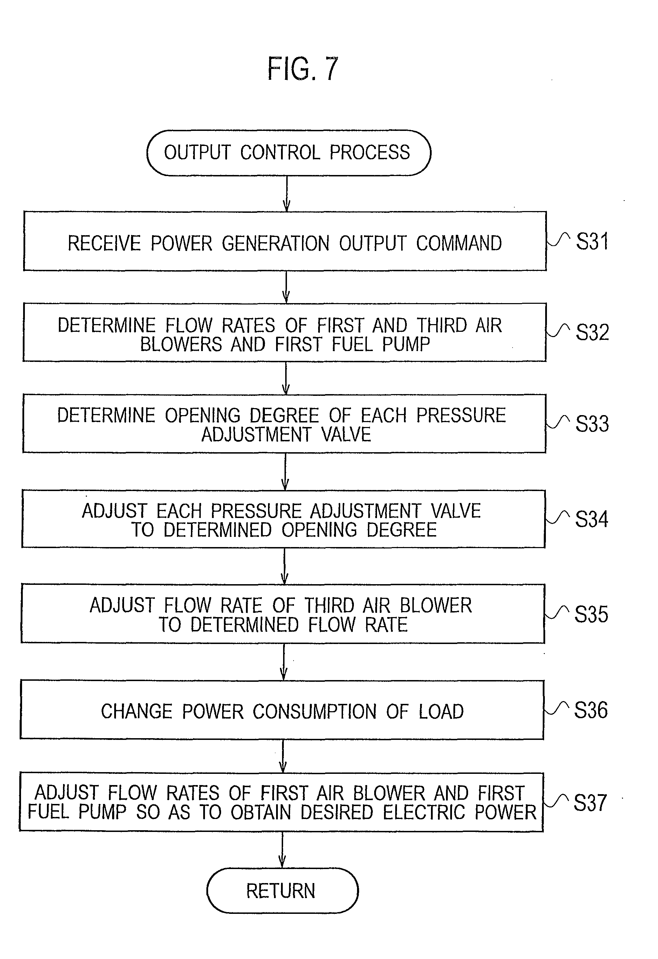

In the following, processing steps by the control unit 31 of the fuel cell power generation system 100a according to the second embodiment will be described with reference to a flowchart shown in Fig. 7.

First, in step S31, when the host system outputs a power generation output command, the control unit 31 receives this power generation output command.

In step S32, based on the power generation output command, the control unit 31 determines the flow rates of the first air blower 12, the first fuel pump 14, and the third air blower 32 that are suitable for outputting electric power corresponding to the power generation output command. Here, the control unit 31 refers to the target temperature data map (not shown) of the fuel cell 11 which has been set in advance according to power generation outputs, for example. As mentioned above, a low temperature, e.g. 650°C, is set in the case where the electric power to be outputted is small, and a higher temperature, e.g. 750°C, is set in the case where the electric power to be outputted is large. In this way, it is possible, with a compact fuel cell 11, to widen the output power range and, at the same time, minimize the length of high temperature operation that accelerates durability deterioration. Moreover, the flow rates of the first and third air blowers 12 and 32 and the first fuel pump 14 can be set based on data of system experiments conducted in advance.

In step S33, the control unit 31 determines the opening degrees of the fuel-flow-path pressure adjustment valve 18 and the exhaust-flow-path pressure adjustment valve 19 in accordance with the flow rates of the air blowers 12 and 32 and the flow rate of the first fuel pump 14 set in the process of step S32.

In step S34, the control unit 31 sends opening-degree adjustment signals to the fuel-flow-path pressure adjustment valve 18 and the exhaust-flow-path pressure adjustment valve 19 so as to obtain the opening degrees determined in the process of step S33. As a result, the fuel-flow-path pressure adjustment valve 18 and the exhaust-flow-path pressure adjustment valve 19 are adjusted to the determined opening degrees.

In step S35, the control unit 31 sends a number-of-revolutions adjustment signal to the third air blower 32 so as to obtain the flow rate thereof determined in the process of step S32. As a result, the third air blower 32 is adjusted to the determined flow rate. Specifically, in the case where high output power is required, the flow rate of the air to be sent out by the third air blower 32 is made lower than that in a case where the output power is low, thereby making higher the temperature of the air to be introduced into the oxidation-gas inlet of the cathode 11a.

By executing the processes of step S31 to S35 described above, the fuel cell power generation system 100a can be prepared for changes to be made in the output power in steps S36 and S37 below. That is, excessive temperature increase and abnormal pressure increase of the fuel cell 11 can be suppressed.

Thereafter, in step S36, the control unit 31 adjusts the power consumption of the external load to thereby adjust the output power of the fuel cell 11.

In step S37, the control unit 31 sends number-of-revolutions adjustment signals to the first air blower 12 and the first fuel pump 14 so as to obtain the flow rates thereof determined in the process of step S32. As a result, the first air blower 12 and the first fuel pump 14 are adjusted to the determined flow rates. Consequently, the temperature of the fuel cell 11 can be controlled to a temperature suitable for the power consumption of the external load, and also the pressure of the exhaust gas can be controlled to a suitable pressure.

As described above, in the fuel cell power generation system 100a according to the second embodiment, air sent out by the first air blower 12 is supplied to the oxidation-gas inlet of the cathode electrode 11 a of the fuel cell 11, and the third air blower 32 is connected to the oxidation-gas inlet and air sent out by the third air blower 32 is supplied thereto.

Thus, in the case where high output power is required, the flow rate of the air to be sent out by the third air blower 32 is reduced to raise the temperature of the air to be introduced into the oxidation-gas inlet of the cathode electrode 11a and thereby raise the operating temperature of the fuel cell 11. Accordingly, the operable output can be improved significantly. Moreover, in a case of low output power, the flow rate of the air to be sent out by the third air blower 32 is increased to lower the temperature of the air to be introduced into the oxidation-gas inlet of the cathode electrode 11 a. In this way, the operating temperature of the fuel cell 11 can be lowered.

[Third Embodiment]

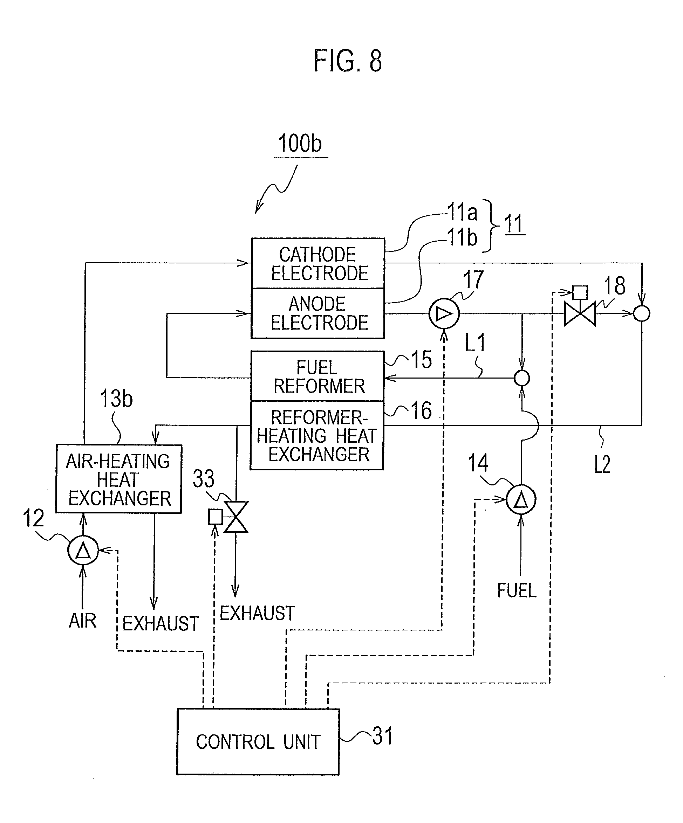

Next, a fuel cell power generation system according to a third embodiment of the present invention will be described. Fig. 8 is a block diagram showing the configuration of a fuel cell power generation system 100b according to the third embodiment. As shown in Fig. 8, the third embodiment differs from the fuel cell power generation system 100 of the foregoing first embodiment in that: the combustion burner 23 connected to the cathode electrode 11a of the fuel cell 11 is not provided; the exhaust-flow-path pressure adjustment valve 19 is not provided upstream of the reformer-heating heat exchanger 16; and a bypass flow rate adjustment valve 33 (temperature adjustment unit, temperature adjustment means) is provided on a high temperature side of an air-heating heat exchanger 13b.

Moreover, in the fuel cell power generation system 100b according to the third embodiment, as the air-heating heat exchanger 13b provided on the output side of the first air blower 12, used is one that is larger than the air-heating heat exchanger 13 shown in Fig. 1. Thus, air sent out by the first air blower 12 receives the heat of exhaust gas supplied to the air-heating heat exchanger 13b and is heated to a higher temperature.

Specifically, the air-heating heat exchanger 13b shown in Fig. 8 has a heat transfer area large enough to heat, to a predetermined temperature, air equivalent to an output ratio of "5" in the characteristic curve shown in Fig. 4. Supplying air at a low flow rate equivalent to an output ratio of "1" increases the temperature of a low temperature side of the air-heating heat exchanger 13b and thus reduces the temperature difference from the operating temperature of the fuel cell 11. For this reason, the temperature of the fuel cell 11 may fail to be maintained at 650°C. In this respect, in the third embodiment, in the case where the output ratio is small and the fuel cell 11 is operated at a low temperature, the opening degree of the bypass flow rate adjustment valve 33 is adjusted such that exhaust gas to be supplied the high temperature side of the air-heating heat exchanger 13b bypasses it, thereby lowering the temperature of the air to be introduced into the oxidation gas inlet of the cathode 11a and thus adjusting the operating temperature of the fuel cell 11.

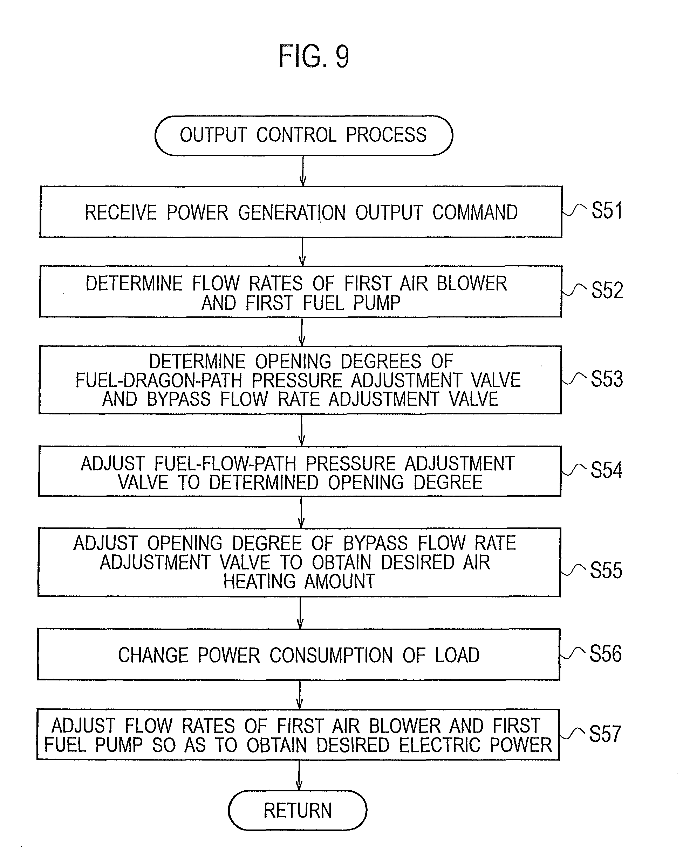

In the following, processing steps by the control unit 31 of the fuel cell power generation system 100b according to the third embodiment will be described with reference to a flowchart shown in Fig. 9.

First, in step S51, when the host system outputs a power generation output command, the control unit 31 receives this power generation output command.

In step S52, based on the power generation output command, the control unit 31 determines the flow rates of the first air blower 12 and the first fuel pump 14 that are suitable for outputting electric power corresponding to the power generation output command. Here, the control unit 31 refers to the target temperature data map (not shown) of the fuel cell 11 which has been set in advance according to power generation outputs, for example. As mentioned above, a low temperature, e.g. 650°C, is set in the case where the electric power to be outputted is small, and a higher temperature, e.g. 750°C, is set in the case where the electric power to be outputted is large. In this way, it is possible to reduce the side of the fuel cell 11, widen the output power range and, at the same time, minimize the length of high temperature operation that accelerates durability deterioration. Moreover, the flow rates of the first air blower 12 and the first fuel pump 14 can be set based on data of system experiments conducted in advance.

In step S53, the control unit 31 determines the opening degrees of the fuel-flow-path pressure adjustment valve 18 and the bypass flow rate adjustment valve 33 in accordance with the flow rate of the first air blower 12 and the flow rate of the first fuel pump 14 set in the process of step S52.

In step S54, the control unit 31 sends opening-degree adjustment signals to the fuel-flow-path pressure adjustment valve 18 and the bypass flow rate adjustment valve 33 so as to obtain the opening degrees determined in the process of step S53. As a result, the fuel-flow-path pressure adjustment valve 18 and the bypass flow rate adjustment valve 33 are adjusted to the determined opening degrees.

In step S55, the control unit 31 sends an opening-degree adjustment signal for the bypass flow rate adjustment valve 33 so as to obtain a desired air heating amount. Specifically, the control unit 31 sends an opening-degree adjustment signal that adjusts the amount of the exhaust gas to be supplied to the high temperature side of the air-heating heat exchanger 13b such that the temperature of the air heated on the low temperature side of the air-heating heat exchanger 13b becomes a desired temperature. As a result, the bypass flow rate adjustment valve 33 is adjusted to the determined opening degree.

By executing the processes of step S51 to S55 described above, the fuel cell power generation system 100b can be prepared for changes to be made in the output power in steps S56 and S57 below. That is, excessive temperature increase and abnormal pressure increase of the fuel cell 11 can be suppressed.

Thereafter, in step S56, the control unit 31 adjusts the power consumption of the external load to thereby adjust the output power of the fuel cell 11.

In step S57, the control unit 31 sends number-of-revolutions adjustment signals to the first air blower 12 and the first fuel pump 14 so as to obtain the flow rates thereof determined in the process of step S52. As a result, the first air blower 12 and the first fuel pump 14 are adjusted to the determined flow rates. Consequently, the temperature of the fuel cell 11 can be controlled to a temperature suitable for the power consumption of the external load, and also the pressure of the exhaust gas can be controlled to a suitable pressure.

As described above, in the fuel cell power generation system 100b according to the third embodiment, the bypass flow rate adjustment valve 33 is provided to the exhaust-gas inlet of the air-heating heat exchanger 13b, and the opening degree of the bypass flow rate adjustment valve 33 is adjusted to adjust the temperature of the air (oxidation gas) to be supplied to the cathode electrode 11a of the fuel cell 11 to a desired temperature.

Thus, in the case where high output power is required, the opening degree of the bypass flow rate adjustment valve 33 is reduced to increase the flow rate of the exhaust gas to be supplied to the air-heating heat exchanger 13b, thus raising the temperature of the air to be introduced into the oxidation-gas inlet of the cathode electrode 11a and thereby raising the operating temperature of the fuel cell 11. Accordingly, the operable output can be improved significantly. Moreover, in a case of low output power, the opening degree of the bypass flow rate adjustment valve 33 is increased to reduce the flow rate of the exhaust gas to be supplied to the air-heating heat exchanger 13b, thus lowering the temperature of the air to be introduced into the oxidation-gas inlet of the cathode electrode 11a. In this way, the operating temperature of the fuel cell 11 can be lowered.

Each foregoing embodiment has described the case where the operating temperature of the fuel cell 11 is changed within a range of 650°C to 750°C as an example. Note that the present invention is not limited to this case, and other temperature ranges can be employed. The temperature range to be set can be appropriately changed according to the operating environment of the fuel cell 11.

Although the fuel cell power generation system and the method of controlling a fuel cell power generation system of the present invention have been described hereinabove based on the illustrated embodiments, the present invention is not limited to these, and the configuration of each component can be replaced with any suitable configuration having a similar function.

This application claims the benefit of priority from Japanese Patent Application No. 2011-011707, filed on January 24, 2011, and the entire content of this application is incorporated herein by reference.

INDUSTRIAL APPLICABILITY

The fuel cell power generation system according to each embodiment of the present invention controls the operating temperature of the fuel cell 11 by controlling the temperature of the oxidation gas to be supplied to the oxidation-gas inlet, when controlling the amount of power generation of the fuel cell 11 on the basis of the power output required by the load. Specifically, in the case where the required output of the fuel cell 11 is high, the temperature of the oxidation gas to be supplied to the oxidation-gas inlet is made higher than that in a case where the required output is low, thereby making the operating temperature of the fuel cell 11 higher. In this way, the operable output can be significantly improved. For example, it is possible to widen the output ratio between the output during the highest efficiency operation, which is a relatively low output operating point, and the output during the highest output operation. Moreover, in the case where the required power output is low, the temperature of the oxidation gas to be supplied to the oxidation-gas inlet is reduced to lower the operating temperature of the fuel cell 11. Accordingly, durability deterioration can be prevented. The fuel cell power generation system according to each embodiment of the present invention is significantly useful in the case of operating a fuel cell 11 at a suitable temperature according to changes in the required output. Hence, the fuel cell power generation system according to each embodiment of the present invention is industrially applicable.

REFERENCE SIGNS LIST

| | |
|---|---|
| 11 | fuel cell |
| 12 | first air blower (oxidation-gas supply unit) |
| 13, 13a, 13b | air-heating heat exchanger (heat exchange unit) |
| 15 | fuel reformer |
| 16 | reformer-heating heat exchanger (reformer heating unit) |
| 18 | fuel-flow-path pressure adjustment valve (second pressure adjustment valve) |
| 19 | exhaust-flow-path pressure adjustment valve (first pressure adjustment valve) |
| 23 | combustion burner (temperature adjustment unit) |
| 31 | control unit |
| 32 | third air blower (temperature adjustment unit) |
| 33 | bypass flow rate adjustment valve (temperature adjustment unit) |
| 100 | fuel cell power generation system |
| L1 | fuel-gas flow path |
| L2 | exhaust-gas flow path |

## Claims

1. A fuel cell power generation system, comprising:

    a fuel cell configured to generate electric power upon supply of oxidation gas and fuel gas;
    a temperature adjustment unit configured to adjust a temperature of the oxidation gas to be supplied to an oxidation-gas inlet of the fuel cell; and
    a control unit configured to, in a case where a required output of the fuel cell is high, output a temperature control signal to the temperature adjustment unit such that the temperature of the oxidation gas to be supplied to the oxidation-gas inlet is made higher than that in a case where the required output is low, wherein
    in the case where the required output of the fuel cell is high, an operating temperature of the fuel cell is made higher than that in the case where the required output is low.

2. The fuel cell power generation system according to claim 1, wherein
    the temperature adjustment unit includes a combustion burner configured to supply heated oxidation gas to the oxidation-gas inlet, and
    in the case where the required output of the fuel cell is high, the control unit outputs the temperature control signal such that an amount of heat generation of the combustion burner is made greater than that in the case where the required output is low.

3. The fuel cell power generation system according to claim 1, further comprising:

    an oxidation-gas supply unit configured to send out the oxidation gas to the oxidation-gas inlet of the fuel cell; and
    a heat exchange unit configured to heat the oxidation gas sent out by the oxidation-gas supply unit by using heat of exhaust gas of the fuel cell, wherein
    the temperature adjustment unit includes a blower provided to a different system from the oxidation-gas supply unit and configured to send out oxidation gas to the oxidation-gas inlet, and
    in the case where the required output of the fuel cell is high, the control unit outputs the temperature control signal such that a flow rate of the oxidation gas to be sent out by the blower is made lower than that in the case where the required output is low.

4. The fuel cell power generation system according to claim 1, further comprising:

an oxidation-gas supply unit configured to send out the oxidation gas to the oxidation-gas inlet of the fuel cell; and
a heat exchange unit configured to heat the oxidation gas sent out by the oxidation-gas supply unit by using heat of exhaust gas of the fuel cell, wherein
the temperature adjustment unit includes a flow rate adjustment valve which is capable of adjusting an amount of the exhaust gas to be supplied to the heat exchange unit by separating a part of the exhaust gas to be supplied to the heat exchange unit, and
in the case where the required output of the fuel cell is high, the control unit outputs the temperature control signal such that the amount of the exhaust gas to be supplied to the heat exchange unit at the flow rate adjustment valve is made greater than that in the case where the required output is low.

5. The fuel cell power generation system according to any one of claims 1 to 3, further comprising:

a fuel reformer configured to reform the fuel gas to be supplied to the fuel cell;
a reformer heating unit configured to heat the fuel reformer by using exhaust gas discharged by the fuel cell; and
a first pressure adjustment valve provided to an inlet flow path of the reformer heating unit for the exhaust gas and configured to adjust a pressure of the exhaust gas by discharging a part of the exhaust gas, and
the control unit outputs a pressure adjustment signal to the first pressure adjustment valve such that the pressure of the exhaust gas of the fuel cell becomes a desired pressure.

6. The fuel cell power generation system according to any one of claims 1 to 4, further comprising:

a fuel reformer configured to reform the fuel gas to be supplied to the fuel cell;
a reformer heating unit configured to heat the fuel reformer by using exhaust gas discharged by the fuel cell; and
a second pressure adjustment valve provided to a flow path for introducing fuel gas discharged by the fuel cell into an inlet of the reformer heating unit, and configured to introduce a part of the fuel gas discharged by the fuel cell into the reformer heating unit; and
the control unit outputs a pressure adjustment signal to the second pressure adjustment valve such that a pressure of the fuel gas to be supplied to the fuel reformer becomes a desired pressure.

7. A fuel cell power generation system, comprising:

a fuel cell for generating electric power upon supply of oxidation gas and fuel gas;
temperature adjustment means for adjusting a temperature of the oxidation gas to be supplied to an oxidation-gas inlet of the fuel cell; and
control means for, in a case where a required output of the fuel cell is high, outputting a temperature control signal to the temperature adjustment means such that the temperature of the oxidation gas to be supplied to the oxidation-gas inlet is made higher than that in a case where the required output is low, wherein
in the case where the required output of the fuel cell is high, an operating temperature of the fuel cell is made higher than that in the case where the required output is low.

8. A method of controlling a fuel cell power generation system including a fuel cell configured to generate electric power upon supply of oxidation gas and fuel gas, and a temperature adjustment unit configured to adjust a temperature of the oxidation gas to be supplied to an oxidation-gas inlet of the fuel cell, the method comprising:

in a case where a required output of the fuel cell is high, outputting a temperature control signal to the temperature adjustment unit such that the temperature of the oxidation gas to be supplied to the oxidation-gas inlet is made higher than that in a case where the required output is low; and
causing the temperature adjustment unit to adjust the temperature of the oxidation gas in accordance with the temperature control signal such that in the case where the required output of the fuel cell is high, an operating temperature of the fuel cell is made higher than that in the case where the required output is low.

# FIG. 1

# FIG. 2

# FIG. 3

## FIG. 4

Y-axis: EXCESS OXIDATION GAS PERCENTAGE RATIO

X-axis: OUTPUT RATIO

Legend:
- △ FC 650℃
- ○ FC 750℃

## FIG. 5

OUTPUT CONTROL PROCESS

RECEIVE POWER GENERATION OUTPUT COMMAND — S11

DETERMINE FLOW RATES OF EACH AIR BLOWER AND EACH FUEL PUMP — S12

DETERMINE OPENING DEGREE OF EACH PRESSURE ADJUSTMENT VALVE — S13

ADJUST EACH PRESSURE ADJUSTMENT VALVE TO DETERMINED OPENING DEGREE — S14

ADJUST FLOW RATES OF SECOND AIR BLOWER AND SECOND FUEL PUMP TO DETERMINED FLOW RATES — S15

CHANGE POWER CONSUMPTION OF LOAD — S16

ADJUST FLOW RATES OF FIRST AIR BLOWER AND FIRST FUEL PUMP SO AS TO OBTAIN DESIRED ELECTRIC POWER — S17

RETURN

# FIG. 6

# FIG. 7

```
        ( OUTPUT CONTROL PROCESS )
                    │
                    ▼
┌──────────────────────────────────────────┐
│ RECEIVE POWER GENERATION OUTPUT COMMAND   │╭─ S31
└──────────────────────────────────────────┘
                    │
                    ▼
┌──────────────────────────────────────────┐
│ DETERMINE FLOW RATES OF FIRST AND THIRD   │╭─ S32
│ AIR BLOWERS AND FIRST FUEL PUMP           │
└──────────────────────────────────────────┘
                    │
                    ▼
┌──────────────────────────────────────────┐
│ DETERMINE OPENING DEGREE OF EACH PRESSURE │╭─ S33
│ ADJUSTMENT VALVE                          │
└──────────────────────────────────────────┘
                    │
                    ▼
┌──────────────────────────────────────────┐
│ ADJUST EACH PRESSURE ADJUSTMENT VALVE     │╭─ S34
│ TO DETERMINED OPENING DEGREE              │
└──────────────────────────────────────────┘
                    │
                    ▼
┌──────────────────────────────────────────┐
│ ADJUST FLOW RATE OF THIRD AIR BLOWER      │╭─ S35
│ TO DETERMINED FLOW RATE                   │
└──────────────────────────────────────────┘
                    │
                    ▼
┌──────────────────────────────────────────┐
│ CHANGE POWER CONSUMPTION OF LOAD          │╭─ S36
└──────────────────────────────────────────┘
                    │
                    ▼
┌──────────────────────────────────────────┐
│ ADJUST FLOW RATES OF FIRST AIR BLOWER AND │╭─ S37
│ FIRST FUEL PUMP SO AS TO OBTAIN DESIRED   │
│ ELECTRIC POWER                            │
└──────────────────────────────────────────┘
                    │
                    ▼
              ( RETURN )
```

FIG. 8

# FIG. 9

```
                    ( OUTPUT CONTROL PROCESS )
                                │
                                ▼
        ┌─────────────────────────────────────────────┐
        │  RECEIVE POWER GENERATION OUTPUT COMMAND      │──── S51
        └─────────────────────────────────────────────┘
                                │
                                ▼
        ┌─────────────────────────────────────────────┐
        │  DETERMINE FLOW RATES OF FIRST AIR BLOWER     │──── S52
        │           AND FIRST FUEL PUMP                 │
        └─────────────────────────────────────────────┘
                                │
                                ▼
        ┌─────────────────────────────────────────────┐
        │        DETERMINE OPENING DEGREES OF           │
        │  FUEL-DRAGON-PATH PRESSURE ADJUSTMENT VALVE   │──── S53
        │  AND BYPASS FLOW RATE ADJUSTMENT VALVE        │
        └─────────────────────────────────────────────┘
                                │
                                ▼
        ┌─────────────────────────────────────────────┐
        │  ADJUST FUEL-FLOW-PATH PRESSURE ADJUSTMENT    │──── S54
        │    VALVE TO DETERMINED OPENING DEGREE         │
        └─────────────────────────────────────────────┘
                                │
                                ▼
        ┌─────────────────────────────────────────────┐
        │  ADJUST OPENING DEGREE OF BYPASS FLOW RATE    │
        │   ADJUSTMENT VALVE TO OBTAIN DESIRED AIR      │──── S55
        │            HEATING AMOUNT                     │
        └─────────────────────────────────────────────┘
                                │
                                ▼
        ┌─────────────────────────────────────────────┐
        │       CHANGE POWER CONSUMPTION OF LOAD        │──── S56
        └─────────────────────────────────────────────┘
                                │
                                ▼
        ┌─────────────────────────────────────────────┐
        │ ADJUST FLOW RATES OF FIRST AIR BLOWER AND FIRST│──── S57
        │ FUEL PUMP SO AS TO OBTAIN DESIRED ELECTRIC POWER│
        └─────────────────────────────────────────────┘
                                │
                                ▼
                          ( RETURN )
```

**INTERNATIONAL SEARCH REPORT**

International application No.

PCT/JP2012/051400

A.  CLASSIFICATION OF SUBJECT MATTER
*H01M8/04*(2006.01)i, *H01M8/06*(2006.01)i, *H01M8/12*(2006.01)n

According to International Patent Classification (IPC) or to both national classification and IPC

B.  FIELDS SEARCHED

Minimum documentation searched (classification system followed by classification symbols)
H01M8/04, H01M8/06, H01M8/12

Documentation searched other than minimum documentation to the extent that such documents are included in the fields searched
Jitsuyo Shinan Koho          1922–1996     Jitsuyo Shinan Toroku Koho     1996–2012
Kokai Jitsuyo Shinan Koho    1971–2012     Toroku Jitsuyo Shinan Koho     1994–2012

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | JP 62-160668 A  (Hitachi, Ltd.),<br>16 July 1987 (16.07.1987),<br>claim 1; page 2, upper right column, lines 1 to 3; page 2, lower right column, line 15 to page 3, upper left column, line 8; fig. 1, 3 to 5<br>(Family: none) | 1,7,8<br>2-6 |
| Y | JP 2009-205868 A  (Kabushiki Kaisha Think Tank Phoenix),<br>10 September 2009 (10.09.2009),<br>claim 1; paragraphs [0014], [0039]; fig. 1, 7<br>(Family: none) | 2 |

☒  Further documents are listed in the continuation of Box C.        ☐  See patent family annex.

* Special categories of cited documents:
"A"  document defining the general state of the art which is not considered to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

Date of the actual completion of the international search
12 April, 2012 (12.04.12)

Date of mailing of the international search report
24 April, 2012 (24.04.12)

Name and mailing address of the ISA/
Japanese Patent Office

Authorized officer

Facsimile No.

Telephone No.

Form PCT/ISA/210 (second sheet) (July 2009)

**INTERNATIONAL SEARCH REPORT**

| International application No. |
|---|
| PCT/JP2012/051400 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2007-66551 A  (Electric Power Development Co., Ltd.), 15 March 2007 (15.03.2007), claims 1, 3; paragraphs [0022], [0025]; fig. 1 (Family: none) | 3,4 |
| Y | JP 2007-328989 A  (Hitachi, Ltd.), 20 December 2007 (20.12.2007), claim 1; paragraphs [0016], [0054]; fig. 1 (Family: none) | 3,4 |
| Y | JP 2008-300251 A  (Honda Motor Co., Ltd.), 11 December 2008 (11.12.2008), paragraphs [0004], [0050]; fig. 1 (Family: none) | 5,6 |

Form PCT/ISA/210 (continuation of second sheet) (July 2009)

**INTERNATIONAL SEARCH REPORT**

| International application No. |
| --- |
| PCT/JP2012/051400 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
   The document 1 (JP 62-160668 A (Hitachi, Ltd.), 16 July 1987 (16.07.1987), claim 1, page 2, upper right column, lines 1-3, page 2, lower right column, line 15-page 3, upper left column, line 8, fig. 1 and 3-5) discloses the invention of claim 1.  Therefore, the invention of claim 1 cannot be considered to be novel in the light of the invention disclosed in the document 1, and does not have a special technical feature.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**       ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**EP 2 669 980 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003115315 A
- JP 2004349214 A
- JP 2011011707 A